# EUROPÄISCHE PATENTSCHRIFT

(11) **EP 2 294 333 B1**
(45) Veröffentlichungstag und Bekanntmachung des Hinweises auf die Patenterteilung: **20.02.2013**
(21) Anmeldenummer: 09769206.5
(22) Anmeldetag: 24.06.2009
(51) Int. Cl.: F16L 37/18

(54) **HEBELARMKUPPLUNG ZUR VERBINDUNG VON SCHLAUCHLEITUNGEN**
LEVER ARM COUPLING FOR CONNECTING HOSE LINES
ACCOUPLEMENT À BRAS DE LEVIER POUR LE RACCORDEMENT DE CONDUITS FLEXIBLES

(30) Priorität: 27.06.2008 CH 997082008
(43) Veröffentlichungstag der Anmeldung: 16.03.2011
(73) Patentinhaber: Dieter K. Eich Maschinenbau, 5058 Wiliberg (CH)
(72) Erfinder: EICH, Dieter, CH-6260 Reiden/LU (CH)
(74) Vertreter: Schneider Feldmann AG Patent- und Markenanwälte
(86) Internationale Anmeldenummer: PCT/EP2009/057716
(87) Internationale Veröffentlichungsnummer: WO 2009/156357

(56) Entgegenhaltungen:
- DE-U1- 29 707 456
- US-A- 4 519 635
- US-A- 4 802 694
- US-A- 5 295 717

## Beschreibung

### Technisches Gebiet

Die vorliegende Erfindung beschreibt eine Hebelarmkupplung zur lösbaren Verbindung von Schlauchleitungen, umfassend einen ersten Verbindungsteil und einen zweiten Verbindungsteil, wobei der zweite Verbindungsteil ein Aufnahmengehäuse mit einem Aufnahmeraum aufweist, an welchem mindestens ein Hebelarm um einen Schwenkbolzen eine Schwenkachse definierend schwenkbar bewegbar mit einem Andrückabschnitt durch eine radiale Öffnung einer Gehäusewand durchgreifend gelagert ist, so dass der Hebelarm von einer Verriegelungsposition über eine Druckentlastungsposition in eine Freistellposition und zurück bringbar ist, wobei der Andrückabschnitt eine vordere Flanke des ersten Verbindungsteils in der Verriegelungsposition lagefixiert bzw. in der Druckentlastungsposition und der Freistellposition freigibt.

### Stand der Technik

Hebelarmkupplungen zur lösbaren Verbindung von Schlauchleitungen, in welchen Flüssigkeiten, Feststoffe und Gase gefördert werden, sind in der Technik bekannt.

Ein erster Verbindungsteil, welcher mit einer ersten Leitung verbunden ist, wird in einem Aufnahmegehäuse eines zweiten Verbindungsteils lösbar befestigt, wobei eine zweite Leitung mit dem zweiten Verbindungsteil verbunden ist. Mindestens ein Hebelarm, welcher mit einem Andrückabschnitt durch eine radiale Öffnung im Aufnahmegehäuse eingreift, erlaubt die Fixierung des ersten Verbindungsteiles innerhalb des Aufnahmegehäuses des zweiten Verbindungsteiles in einer Verriegelungsposition. Der Andrückabschnitt des Hebelarmes greift mit einer Andrückfläche in eine Umfangsnut am ersten Verbindungsteil klemmend ein. Üblicherweise werden zwei Hebelarme vorgesehen, welche auf gegenüberliegenden Seiten des Aufnahmegehäuses in einen Aufnahmeraum des Aufnahmegehäuses eingreifend schwenkbar gelagert sind.

Die bekannten Hebelarmkupplungen geben das erste Verbindungsteil aus dem zweiten Verbindungsteil in eine Freistellposition der Hebelarme frei. Eine flüssigkeitsdichte Verbindung des ersten Verbindungsteiles und des zweiten Verbindungsteiles ist in der Verriegelungsposition erreicht, sodass die Hebelarmkupplung die erste Schlauchleitung und die zweite Schlauchleitung dichtend in einem Druckbereich von bis zu 10 bar verbindet.

In der Vergangenheit wurde die erreichbare Dichtigkeit der Hebelarmkupplung, sowie die Bedienungssicherheit der Hebelarme verbessert. In der EP0615090 ist eine Vorrichtung beschrieben, welche die Sicherung der Position der Hebelarme in der Verriegelungsposition erreicht, wobei eine unbeabsichtigte Betätigung der Hebelarme ausgeschlossen wird. Eine zufällige ungewollte vollständige Trennung der Kupplungsteile der Hebelarmkupplung wird durch diese Vorrichtung ausgeschlossen, so dass Unfälle mit Druck beaufschlagten Hebelarmkupplungen vermeidbar sind.

Die EP0615090 offenbart eine Hebelarmkupplung, die einen zweistufigen Verriegelungsvorgang aufweist, wobei die Hebelarmkupplung von einer Freistellposition, in welcher das erste Verbindungsteil in das Aufnahmegehäuse einführbar und ausführbar ist in eine Verriegelungsposition bringbar ist. Bei der Lösung einer unter Druck stehenden Verbindung der ersten Schlauchleitung und der zweiten Schlauchleitung, kann es aber zu einem unkontrollierten Entweichen des Überdruckes und einem Ausschlagen der Hebelarme kommen, sobald die klemmende Verbindung zwischen der Andrückfläche des Hebelarmes und einer Klemmflanke der Umfangsnut gelöst ist. Durch den Überdruck in der ersten und zweiten Schlauchleitung wird das erste Verbindungsteil aus dem Aufnahmegehäuse gepresst und die beförderte Flüssigkeit oder das Gas entweichen ruckartig. Durch die relative Bewegung des ersten Verbindungsteiles zum zweiten Verbindungsteil werden die Hebelarme schlagartig in die Freistellposition bewegt, was zu Verletzungen des Bedienpersonals und zur Zerstörung der Hebelarmkupplung führen kann. Die Schliessgenauigkeit und die Dichtheit der Hebelarmkupplung verschlechtern sich im Betrieb, wenn bei wiederholter Entkupplung die Hebelarme ausschlagen.

Die bisherigen Lösungen führen dazu, dass beim ersten Schritt der Lösung der beiden Verbindungsteile sich ein dazwischen liegendes Dichtungsgummi verschiebt und somit gar keine Druckentlastung oder Entlüftung stattfindet. Bei der vollständigen Trennung ist somit der Druck noch vorhanden und die beiden Teile schiessen auseinander mit entsprechender Verletzungsgefahr.

Hebelarmkupplungen des Stands der Technik weisen eine Verriegelungsposition auf, in welcher ein erster Verbindungsteil mit einem zweiten Verbindungsteil lösbar dichtend verbunden ist. Die Trennung des ersten und zweiten Verbindungsteiles findet in einer Freistellposition statt, in welcher der erste Verbindungsteil aus dem Aufnahmegehäuse des zweiten Verbindungsteiles in Richtung der Längsachse des Einführungsabschnittes entfernbar ist. Hebelarmkupplungen mit zweistufigem Verriegelungsvorgang haben die oben erwähnten Nachteile.

Die US 4802694 offenbart den Oberbegriff des Anspruchs 1.

### Darstellung der Erfindung

Die vorliegende Erfindung hat sich zur Aufgabe gestellt eine Hebelarmkupplung zu schaffen, welche eine kontrollierte Positionsänderung der Hebelarme und eine kontrollierte Druckentlastung oder Entlüftung während des Entriegelungsvorganges der Hebelarmkupplung, bei mit Druck beaufschlagter Verbindung eines ersten Verbindungsteiles mit einem zweiten Verbindungsteiles gewährleistet.

Diese Aufgabe und zusätzlich die Vermeidung eines ungewollten Ausschlagens der Hebelarme, sowie die Gewährleistung einer stattfindenden Druckentlastung oder Entlüftung erfüllt eine Hebelarmkupplung mit den Merkmalen des Patentanspruches 1.

Weitere vorteilhafte Ausgestaltungsformen sind in den abhängigen Ansprüchen offenbart.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1: zeigt eine Aufsicht auf einen Ausschnitt einer erfindungsgemässen Hebelarmkupplung in Verriegelungsposition, wobei eine Hälfte eines Aufnahmegehäuses eines zweiten Verbindungsteiles mit einem Hebelarm teilweise geschnitten dargestellt ist.
- Figur 2: zeigt eine Aufsicht gemäss Figur 1, wobei die dargestellte Hebelarmkupplung in einer Druckentlastungs-/Entlüftungsposition oder noch dichtender Position ist.
- Figur 3: zeigt eine Aufsicht gemäss Figur 2, wobei der dargestellte Hebelarm in einer Freistellposition ist und ein Rückhaltenocken einer Sicherungsscheibe in eine Klemmflanke der Umfangsnut verkeilend eingreift.
- Figur 4: zeigt eine Aufsicht gemäss Figur 3, wobei der dargestellte Hebelarm in einer Freistellposition ist und der Andrückabschnitt sowie die Sicherungsscheibe das erste Verbindungsteil freigibt.
- Figur 5: zeigt eine Aufsicht auf eine Sicherungsscheibe.
- Figur 6a: zeigt eine Aufsicht auf einen Hebelarm, während
- Figur 6b: eine Seitenansicht eines Hebelarmes zeigt.
- Figur 7a: zeigt einen Schnitt einer weiteren Ausführungsform eines zweiten Verbindungsteils in Form eines Blindstopfens, während
- Figur 7b: eine reine Schnittzeichnung des um 90° rotierten Verbindungsteils gemäss Figur 7a zeigt.
- Figur 8: zeigt eine Aufsicht auf eine weitere Ausführungsform der Sicherungsscheibe.

### Beschreibung

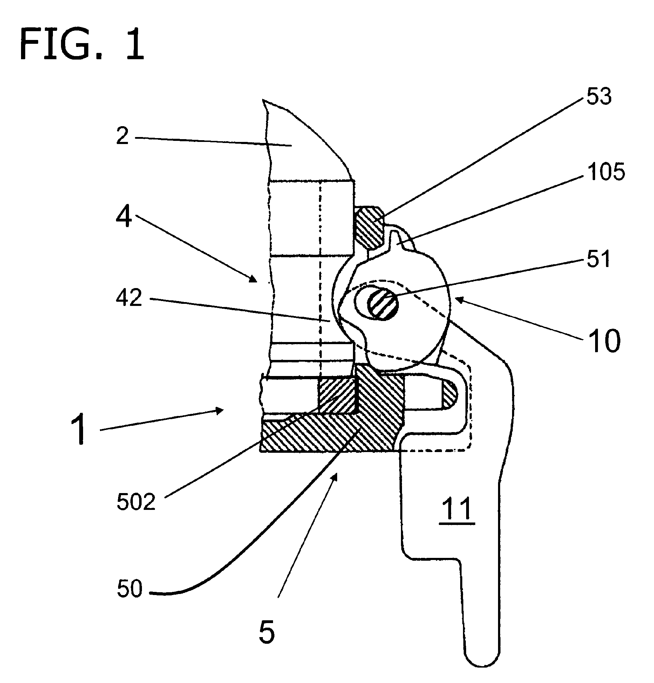

In der Figur 1 wird ein Teil einer Hebelarmkupplung 1 gezeigt, welche ein erstes Verbindungsteil 4 einer ersten Schlauchleitung 2 mit einem zweiten Verbindungsteil 5 verkuppelt. Der hier dargestellte zweite Verbindungsteil 5 weist ein Aufnahmegehäuse 50 mit einer ringförmigen Gehäusewand 501 auf, in dessen Aufnahmeraum 500 der erste Verbindungsteil 4 mit einem Einführungsabschnitt 40 einführbar ist. Der Einführungsabschnitt 40 weist eine Umfangsnut 42 auf, welche durch eine hintere Flanke 41 und eine vordere Flanke 43 begrenzt wird. Das erste Verbindungsteil 4 ist mittels eines Dichtungsringes 502 flüssigkeits- und gasdicht mit dem zweiten Verbindungsteil 5 lösbar verbunden.

Die Erfindung wird hier am Beispiel eines zweiten Verbindungsteiles 5 in der Art eines Blindstopfens erläutert, wobei natürlich auch eine weitere Schlauchleitung an den zweiten Verbindungsteil 5 angeschlossen denkbar ist.

Der Hebelarm 11 weist eine zylindrische Bohrung 111 in einem Andrückabschnitt 112 auf. Ein Schwenkbolzen 51, welcher am Aufnahmegehäuse 50 angeformt oder losbar befestigt ist, greift durch die zylindrische Bohrung 111 hindurch, womit der Hebelarm 11 im Bereich des Andrückabschnittes 112 am zweiten Verbindungsteil 5 in die Gehäusewand 501 durch eine radiale Öffnung 52 eingreifend und damit mit dem Aufnahmegehäuse 50 wirkverbunden befestigt ist. Der Hebelarm 11 ist um eine Schwenkachse, welche durch den Schwenkbolzen 51 verläuft, relativ zum Aufnahmegehäuse 50 schwenkbar. Der Andrückabschnitt 112, der durch die radiale Öffnung 52 im Aufnahmegehäuse 50 durchgreift, weist eine Andrückfläche 114 auf, welche mit einer vorderen Flanke 43 des Einführungsabschnittes 40 wirkverbindbar ist.

In einer Verriegelungsposition des Hebelarmes 11 greift der Andrückabschnitt 112 in die Umfangsnut 42 des in das Aufnahmegehäuse 50 eingeschobenen ersten Verbindungsteiles 4 ein. Die Andrückfläche 114 ist dabei auf die vordere Flanke 43 gepresst klemmbar, wodurch eine lösbare formschlüssige flüssigkeitsdichte und/oder gasdichte Verbindung des ersten Verbindungsteiles 4 im Aufnahmegehäuse 50 des zweiten Verbindungsteiles 5 erreicht wird. In der Verriegelungsposition ist damit eine lineare Bewegung des ersten Verbindungsteiles 4 relativ zum zweiten Verbindungsteil 5 verunmöglicht. Ein Verriegelungsanschlag 55 ist zur Begrenzung der Bewegung des Hebelarmes 11 in die Verriegelungsposition am zweiten Verbindungsteil 5 vorgesehen.

Von der Verriegelungsposition ist der Hebelarm 11 in eine Freistellposition bringbar, in welcher der erste vom zweiten Verbindungsteil 4, 5 lösbar ist. Bei der Bewegung des Hebelarmes 11 in die Freistellposition findet eine Druckentlastung oder Entlüftung der ersten Schlauchleitung 2 statt, da die flüssigkeits- und/oder gasdichte Verbindung zwischen dem ersten Verbindungsteil 4 und dem zweiten Verbindungsteil 5 getrennt wird. In der vorliegenden Patentanmeldung wird allgemein von Druckentlastung gesprochen, welche beispielsweise eine Entlüftung- darstellt, wenn gasförmige Medien verwendet werden. Die Freistellposition und eine damit verbundene Druckentlastung oder Entlüftung kann stattfinden, sobald ein am Andrückabschnitt 112 befindlicher Freigabepunkt 116 den ersten Verbindungsteil 4 freigibt. Die Formgebung des Andrückabschnittes 112 und die Positionierung des Freigabepunktes 116 bestimmen, bei welcher Auslenkung des Hebelarmes 11 eine Druckentlastung oder Entlüftung stattfinden kann.

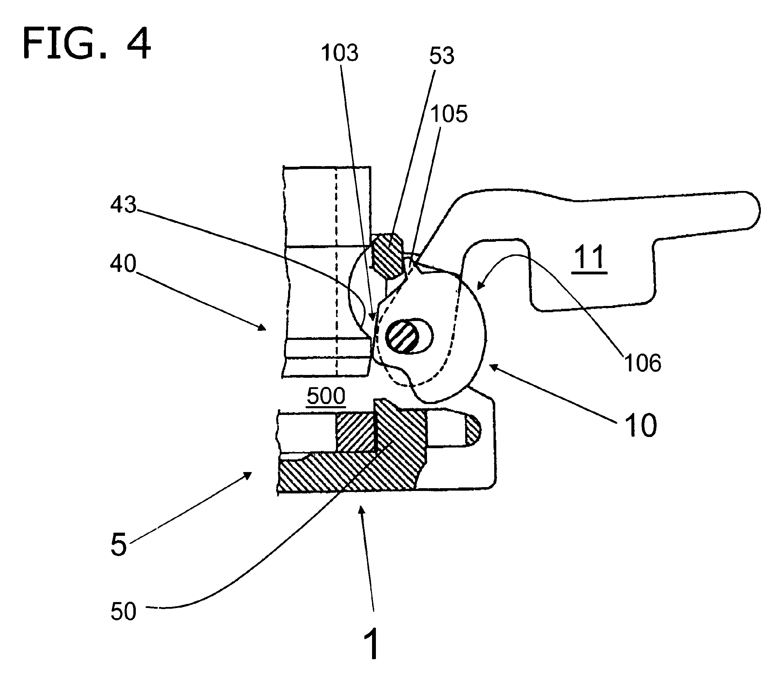

In der Freistellposition ist der Hebelarm 11 derart orientiert, dass die Andrückfläche 114 des Andrückabschnittes 112 nicht mit der Umfangsnut 42 oder mit einem anderen Teil des Einführungsabschnittes 40, welcher tailliert ausgestaltet ist, in Eingriff oder in Kontakt ist. Die maximale Auslenkung des Hebelarmes 11 wird durch einen Freistellungsanschlag 53 am zweiten Verbindungsteil 5 begrenzt, was in Figur 4 erkennbar ist.

Wenn der Hebelarm 11 und damit der Andrückabschnitt 112 von der Verriegelungsposition in Richtung der Freistellposition bewegt wird, gibt die Andrückfläche 114 den ersten Verbindungsteil 4 innerhalb des Aufnahmegehäuses 50 ab dem Freigabepunkt 116 frei, sodass der Einführungsabschnitt 40 aus dem Aufnahmegehäuse 50 entfernbar ist.

Um eine unkontrollierbare Druckentlastung oder Entlüftung und eine ungewollte lineare Bewegung des ersten Verbindungsteiles 4 aus dem Aufnahmegehäuse 50 zu vermeiden, wird erfindungsgemäß eine Sicherungsscheibe 10 bewegbar auf dem Schwenkbolzen 51 annähernd parallel zum Andrückabschnitt 112 des Hebelarms 11 gelagert. Diese Sicherungsscheibe 10 ist unabhängig vom Hebelarm 11 schwenkbar. Am Hebelarm 11 ist bevorzugt eine Ausnehmung 115 mit einer Ausnehmungsfläche 117 ausgespart, welche mit der Sicherungsscheibe 10 zusammenwirkt.

Die Sicherungsscheibe 10 quert erfindungsgemäß ein Langloch 101. Die äussere Form des hier dargestellten Langloches 101 einer bevorzugten Ausführungsform der Sicherungsscheibe 10 weist einen gekrümmten Verlauf auf, wobei ebenso eine lineare Formgebung möglich wäre. Ein Rückhaltenocken 104 ist derart ausgebildet, dass dieser Rückhaltenocken 104 bei auf dem Schwenkbolzen 51 gelagerter Sicherungsscheibe 10 in die Umfangsnut 42 hineinragbar ausgestaltet ist. Neben dem Rückhaltenocken 104, der mit der vorderen Flanke 43 zusammenwirkt, sind noch ein Begrenzungsnocken 102 und ein Mitführnocken 105 an der Sicherungsscheibe 10 angeformt.

In der Verriegelungsposition gemäss Figur 1 hält die Andrückfläche 114 die vordere Flanke 43 des ersten Verbindungsteiles 4, während der Rückhaltenocken 104 in die Umfangsnut 42 ohne Wirkung und Berührung des ersten Verbindungsteiles 4 hineinragt.

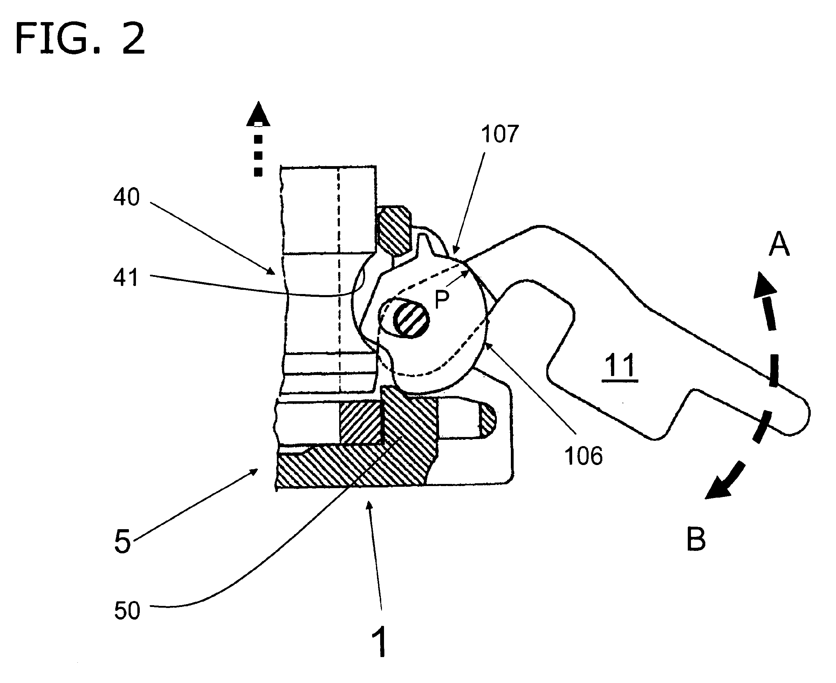

Wird der Hebelarm 11 aus der Verriegelungsposition bewegt, verliert die Andrückfläche 114 den Kontakt zur vorderen Flanke 43, so dass der erste Verbindungsteil 4 freigegeben ist und linear aus dem Aufnahmegehäuse 50 bewegbar ist. Der Rückhaltenocken 104 greift, wie in Figur 2 erkennbar in die Umfangsnut 42 ein und berührt die vordere Flanke 43.

Durch die lineare Bewegung des ersten Verbindungsteiles 4 aus dem Aufnahmegehäuse 50 heraus, wird die Sicherungsscheibe 10 um die Schwenkachse durch den Kontakt des Rückhaltenockens 104 mit der vorderen Flanke 43 soweit in Richtung Uhrzeigersinn in eine erste Richtung B geschwenkt, bis der Begrenzungsnocken 102 an einen Druckentlastungsanschlag 54 am zweiten Verbindungsteil 5 anschlägt.

Auf die Sicherungsscheibe 10 wirkt eine Kraft P, welche von der Ausnehmungsfläche 117 durch den formschlüssigen Kontakt mit der Aussenkontur 106 abgefangen wird, so dass keine Kräfte auf den Hebelarm 11 in eine zweite Richtung A im Gegenuhrzeigersinn oder in die Richtung B im Uhrzeigersinn wirken und damit der Hebelarm 11 nicht bei der Druckentlastung oder Entlüftung in die Richtungen A oder B ungewollt bewegt wird. Die Sicherungsscheibe 10 kann nicht im Uhrzeigersinn A gemäss Figur 2 rotiert werden, da die Aussenkontur 106 nicht an der Ausnehmungsfläche 117 entlang führbar ist und der Begrenzungsnocken 102 vom Druckentlastungsanschlag 54 gehalten wird. Die Sicherungsscheibe 10 wird durch die Ausnehmungsfläche 117 abgestützt. In der, in Figur 2 dargestellten Position kann erstmals eine Entlüftung bzw. Druckentlastung oder Druckerhaltung stattfinden.

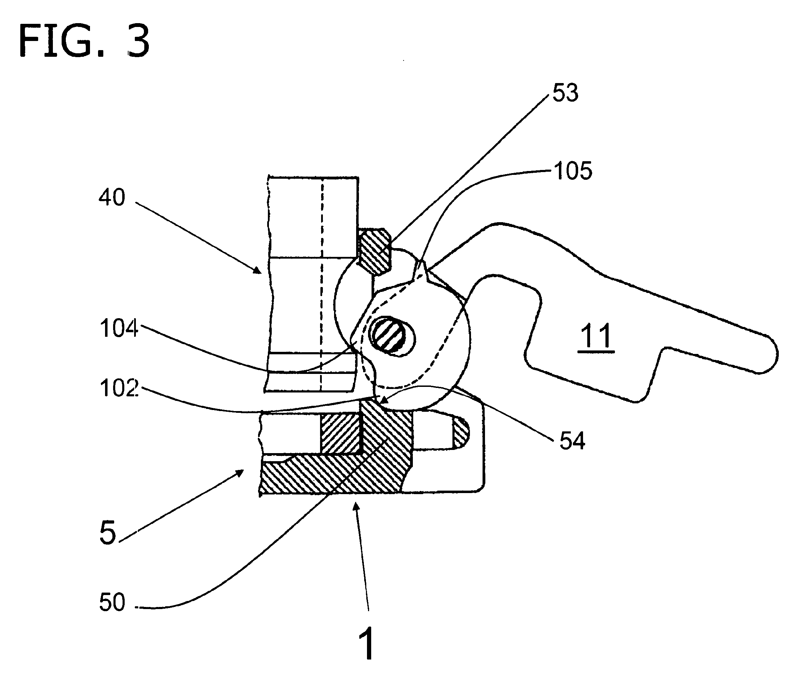

Die Kraft P hemmt die Bewegung der Sicherungsscheibe 10 derart, dass die Sicherungsscheibe 10 nur minimal im Uhrzeigersinn rotierbar ist. Bei einer Verschwenkung des Hebelarmes 11 nach oben in Richtung A gemäss Figur 2, überstreicht die Ausnehmungsfläche 117 des Andrückabschnittes 112 eine Abflachung 107, welche an die Aussenkontur 106 der Sicherungsscheibe 10 anschliesst. Die Sicherungsscheibe 10 ist dann nicht mehr formschlüssig mit der Ausnehmungsfläche 117 verbunden, so dass eine lineare Verschiebung der Sicherungsscheibe 10, wie in Figur 3 ersichtlich, auftritt.

Der Mitführnocken 105 verhindert die ungewünschte Rotation der Sicherungsscheibe 10 gegen den Uhrzeigersinn in das Aufnahmegehäuse 50 hinein, indem der Mitführnocken 105 am Freistellanschlag 53 anschlägt. Der Mitführnocken 105 verhindert ebenso eine unkontrollierte Rotation der Sicherungsscheibe 10 im Uhrzeigersinn, da der Mitführnocken 105 gegen die Ausnehmungsfläche 117 am Hebelarm 11 anschlägt.

Bei einer geringen Verschwenkung des Hebelarmes 11 gegen den Uhrzeigersinn, kann die Sicherungsscheibe 10 bestimmt durch die Ausgestaltung des Langloches 101 von der Längsachse des Aufnahmegehäuses 50 weg aus dem Aufnahmegehäuse 50 heraus geführt bewegt werden.

In dieser gesicherten Druckentlastungsposition, ist die lineare Bewegung des ersten Verbindungsteils 4 aus dem Aufnahmegehäuse 50 heraus durch das pressende Zusammenwirken des Rückhaltenockens 104 auf die vordere Flanke 43, das Zusammenwirken des Begrenzungsnockens 102 mit dem Druckentlastungsanschlag 54 und den Anschlag des Mitführnockens 105 am Hebelarm 11 unterbunden.

Der erste Verbindungsteil 4 kann keine lineare Bewegung annähernd parallel zur Längsachse des ersten Verbindungsteiles 4 ausführen. Das Zusammenwirken des Rückhaltenockens 104 mit der vorderen Flanke 43 der Umfangsnut 42 verunmöglicht eine ungewollte Bewegung und beim Entlüften kommt es nicht zum Ausschlagen der Hebelarme 11.

Um die gesicherte, druckentlastete Position aufzulösen, wird der Hebelarm 11 weiter gegen den Uhrzeigersinn geschwenkt, wie in Figur 4 dargestellt. Der Hebelarm 11 führt die Sicherungsscheibe 10 bei der Schwenkbewegung gegen den Uhrzeigersinn mit.

Die, an den Andrückabschnitt 112 angeformte Aussnehmung 115 nimmt den Mitführnocken 105 und damit die Sicherungsscheibe 10 mit und die Sicherungsscheibe 10 wird um die Schwenkachse derart geschwenkt, dass der Rückhaltenocken 104 die vordere Flanke 43 der Umfangsnut 42 freigibt. Eine Freistellfläche 103 der Sicherungsscheibe 10 ist dem ersten Verbindungsteil 4 zugewandt. Die Freistellfläche 103 liegt dabei annähernd parallel zur Aussenfläche des ersten Verbindungsteiles 4 und somit kann der erste Verbindungsteil 4 aus dem Aufnahmegehäuse 50 entfernt werden.

Der Andrückabschnitt 112 des Hebelarms 11 führt den Mitführnocken 105 der Sicherungsscheibe 10 bei der Schwenkbewegung in die Freistellposition soweit mit, bis der Mitführnocken 105 am Freistellanschlag 53 anliegt. Damit die Sicherungsscheibe 10 mit Hilfe des Mitführnockens 105 von der gesicherten Druckentlastungsposition in die Freistellposition führbar ist, muss die Gestaltung der Aussenkontur 106 der Sicherungsscheibe 10 so ausgeführt sein, dass die Ausnehmungsfläche 117 der Ausnehmung 115 des Andrückabschnittes 112 die Aussenkontur 106 überstreichen kann.

Eine Fixierung der Hebelarme 11 in der Verriegelungsposition kann beispielsweise wie in EP0615090 offenbart erreicht werden, wobei in den Hebelarmen 11 gefedert gelagerte Sicherungsstifte mit zugehörigen Zugelementen einsetzbar sind. Diese Sicherungsstifte sind in dafür vorgesehene Ausnehmungen am zweiten Verbindungsteil einführbar und dort sicherbar, wodurch eine ungewollte Öffnung der Hebelarme 11 verunmöglicht wird.

Hebelarmkupplungen gemäss dem Stand der Technik, welche die hier beschriebene Sicherungsscheibe 10 nicht umfassen, weisen eine ruckartige und nicht kontrollierbare Bewegung des Hebelarmes von der Verriegelungsposition zur Freistellposition auf, wenn die erste Schlauchleitung 2 einen Überdruck aufweist. Die hier vorgestellte Hebelarmkupplung 1, welche zwischen einer Verriegelungsposition und einer Freistellposition eine gesicherte Druckentlastungs- oder Druckerhaltungsposition aufweist, verhindert eine ruckartige ungewollte Druckentlastung oder Entlüftung.

In Figur 3 ist die gesicherte Druckentlastungs- oder Druckerhaltungsposition des Hebelarmes 11, bzw. des ersten Verbindungsteiles 4 innerhalb des Aufnahmegehäuses 50 des zweiten Verbindungsteiles 5 dargestellt. Durch das Zusammenwirken des Rückhaltenockens 104 mit der vorderen Flanke 43 des Einführungsabschnittes 40, wird die Sicherungsscheibe 10 derart durch eine Schwenkbewegung relativ zum Schwenkbolzen 51 ausgerichtet, dass der Begrenzungsnocken 102 am Druckentlastungsanschlag 54 anschlägt, wobei die Kraft P die Aussenkontur 106 gegen die Ausnehmungsfläche 117 presst und somit die Sicherungsscheibe 10 in die Umfangsnut 42 verkeilt eingreifend fixiert ist.

Wenn die erste Schlauchleitung 2 oder eine nicht dargestellte zweite Schlauchleitung mit Druck beaufschlagt ist, wird der erste Verbindungsteil 4 durch den Überdruck linear aus dem Aufnahmegehäuse 50 gedrückt.

Dabei wird durch das Zusammenwirken des Rückhaltenockens 104 mit der vorderen Flanke 43 die Sicherungsscheibe 10 entgegen dem Uhrzeigersinn minimal geschwenkt und durch die Kraft P linear gegen die Ausnehmungsfläche 117 gedrückt.

Versuche haben gezeigt, dass beim Übergang in die Druckentlastungsposition nicht zwingend eine Druckentlastung oder Entlüftung stattfindet, da der flexible Dichtungsring 502 weiterhin mit dem ersten Verbindungsteil 4 dichtend in Kontakt bleibt. Die Dichtungsringe 502 werden aus Kunststoffen hergestellt und sind flexibel ausgeführt, wobei die Dichtungsringe 502 je nach Anwendungsgebiet der Hebelarmkupplung 1 gegen Chemikalien resistent sein müssen und die maximal auftretenden Drücke aushalten müssen.

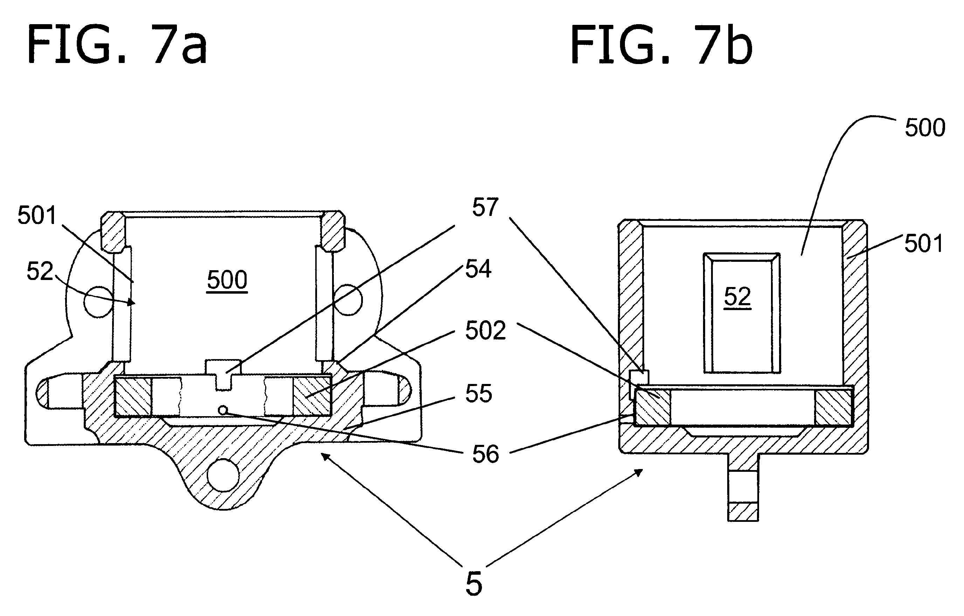

Um eine Druckentlastung oder Entlüftung der Hebelarmkupplung 1 beim Übergang in die gesicherte Druckentlastungsposition sicherzustellen, kann wie in den Figuren 7a und 7b dargestellt, wahlweise mindestens ein Druckentlastungsloch 56 und/oder mindestens eine Druckentlastungstasche 57 in die Gehäusewand 501 eingebracht sein.

Das Druckentlastungsloch 56 kann die Gehäusewand 501 durchsetzend im Bereich des Dichtungsringes 502 angeordnet sein. In den Figuren ist ein beispielhaftes Druckentlastungsloch 56 radial zur ringförmigen Gehäusewand 501 weisend angeordnet. Auch eine andere Orientierung des Druckentlastungsloches 56, beispielsweise annähernd parallel zur Längsachse des Aufnahmegehäuses 50 ist möglich, wobei der Dichtungsring 502 das Druckentlastungsloch 56 bei Verbindung des ersten Verbindungsteiles 4 mit dem zweiten Verbindungsteil 5 dichtend abschliesst.

Die Druckentlastungstasche 57 ist in den Rand der Gehäusewand 501 beliebig orientiert einbringbar, wobei der Dichtungsring 502 bei Verbindung des ersten mit dem zweiten Verbindungsteil 4, 5 eine flüssigkeits- und gasdichte Verbindung erlaubt. Die in der Gehäusewand 501 ausgesparte Druckentlastungstasche 57 kann bei der Herstellung des Aufnahmegehäuses 50 direkt ausgespart werden, oder in einer nachträglichen Bearbeitung des Aufnahmegehäuses 50 in den Randbereich des Innenraumes des Aufnahmegehäuses 50 beispielsweise ausgefräst werden.

Wenn die Hebelarmkupplung 1 in die gesicherte Druckentlastungsposition gebracht wird, ist der Dichtungsring 502 bewegbar und kann in Richtung des ersten Verbindungsteiles 4 verkippen, wobei Flüssigkeit oder Gas aus der ersten Schlauchleitung 2 nach dem Durchgang durch das Druckentlastungsloch 56 und/oder die eingefräste Druckentlastungstasche 57 entweichen kann. Im Fall des Druckentlastungsloches 56 kann Gas oder Flüssigkeit aus dem Druckentlastungsloch aus dem Aufnahmegehäuse 50 nach aussen direkt entweichen, wodurch die Druckentlastung oder Entlüftung garantiert ist. Im Fall der, in die Gehäusewand 501 eingefrästen Druckentlastungstasche 57 kann Gas oder Flüssigkeit an der Gehäusewand 501 innerhalb des Aufnahmegehäuses 50 am ersten Verbindungsteil 4 vorbei aus dem zweiten Verbindungsteil 5 entweichen.

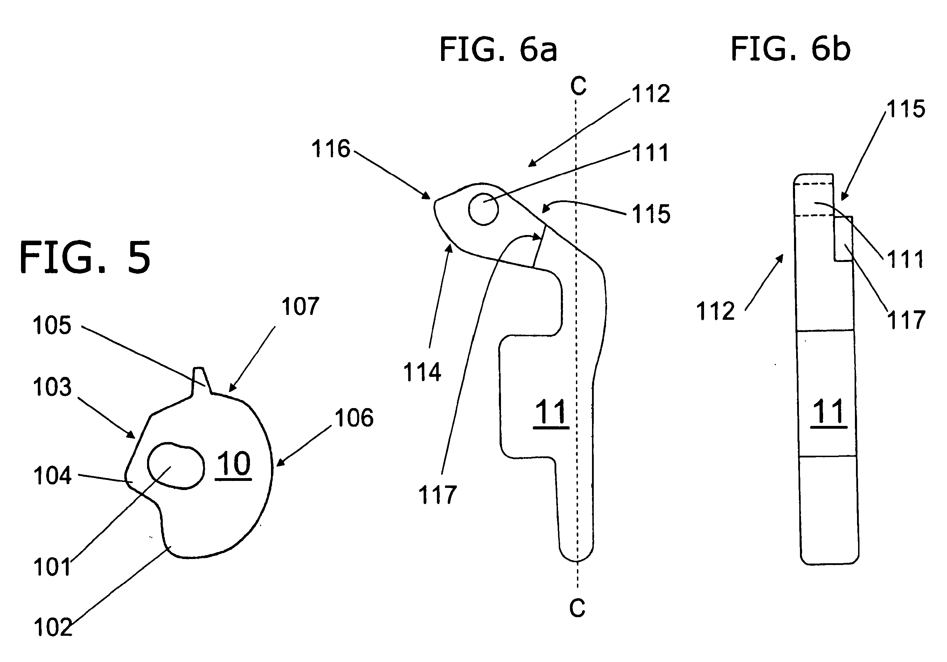

Versuchsreihen haben gezeigt, dass die Ausnehmung 115 bevorzugt eine relativ zum Langloch 101 schräg verlaufende Ausnehmungsfläche 117 aufweisen sollte. Die Ausnehmungsfläche 117 sollte nicht parallel zur in Figur 6a angedeuteten Längsachse C-C orientiert sein. Damit ist eine vorteilhafte Verklemmung der Sicherungsscheibe 10 in der Ausnehmung 115 und trotzdem ein gewünschtes Überstreichen der Ausnehmungsfläche 117 durch die Aussenkontur 106 und eine Freigabe der Sicherungsscheibe 10, sobald die Abflachung 107 an der Ausnehmungsfläche 117 vorbeigeführt wird, erreichbar.

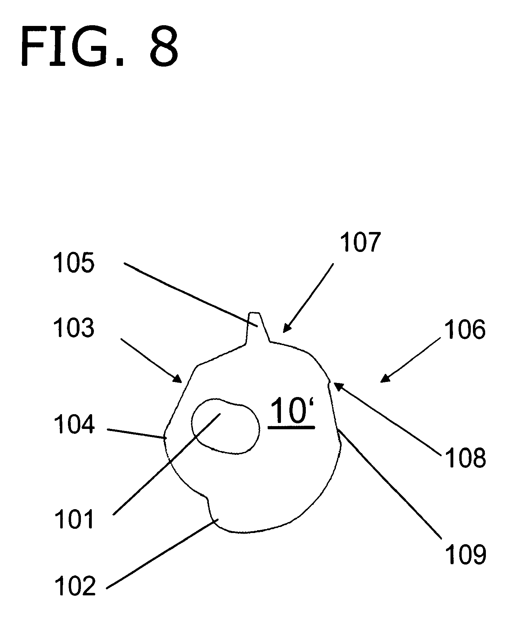

Eine weitere Ausführungsform einer Sicherungsscheibe 10', welche bei einem Überdruck in der ersten Schlauchleitung 2 eine ruckartige Bewegung des Hebelarmes von der Verriegelungsposition zur Freistellposition verhindert, ist in Figur 8 dargestellt.

Neben den bereits beschriebenen Merkmalen weist die Sicherungsscheibe 10' eine ebene Fläche 109 und einen an die Aussenkontur 106 und die ebene Fläche 109 angrenzenden Vorsprung 108 auf. Die Ausnehmungsfläche 117 der Ausnehmung 115 des Hebelarms 11 überstreicht die Aussenkontur 106 der Sicherungsscheibe 10' wie bereits oben erläutert. Nach der Freistellposition des Hebelarmes 11, berührt die Kante der Ausnehmungsfläche 117 den Vorsprung 108, wodurch die überstreichende Bewegung über die ebene Fläche 109 und damit die Aussenkontur 106 gebremst wird. Ein ungewolltes und ruckartiges Aufspringen der Hebelarmkupplung ist damit verunmöglicht, da die Kraft P bei druckbeaufschlagter Hebelarmkupplung die Sicherungsscheibe 10' und somit die ebene Fläche 109 und den angrenzenden Vorsprung 108 gegen die Ausnehmungsfläche 117 des Hebelarms presst und somit verkeilt. Nach erfolgter automatischer oder manuell getätigter Druckentlastung kann die Bewegung des Hebelarms 11 mit der Sicherungscheibe 10' in die Entkupplungsposition erfolgen.

### Bezugszeichenliste

- 1: Hebelarmkupplung
- 2: erste Schlauchleitung
- 4: Erstes Verbindungsteil
40 Einführungsabschnitt (tailliert)
41 hintere Flanke
42 Umfangsnut (ringförmig)
43 vordere Flanke
- 5: Zweite Verbindungsteil
50 Aufnahmegehäuse
500 Aufnahmeraum
501 Gehäusewand (ringförmig)
502 Dichtungsring
51 Schwenkbolzen
52 radiale Öffnung
53 Freistellanschlag
54 Druckentlastungsanschlag
55 Verriegelungsanschlag
56 Druckentlastungsloch
57 Druckentlastungstasche
- 10: Sicherungsscheibe
101 Langloch
102 Begrenzungsnocken
103 Freistellfläche
104 Rückhaltenocken
105 Mitführnocken
106 Aussenkontur
107 Abflachung
108 Vorsprung
109 ebene Fläche
- 11: Hebelarm
111 zylindrische Bohrung
112 Andrückabschnitt
114 Andrückfläche
115 Ausnehmung
116 Freigabepunkt
117 Ausnehmungsfläche
- A: Zweite Richtung/Gegenuhrzeigersinn
- B: Erste Richtung/Uhrzeigersinn
- P: Kraft

## Patentansprüche

1. Hebelarmkupplung (1) zur lösbaren Verbindung von Schlauchleitungen, umfassend einen ersten Verbindungsteil (4) und einen zweiten Verbindungsteil (5) mit einem Dichtungsring (502), wobei der zweite Verbindungsteil (5) ein Aufnahmengehäuse (50) mit einem Aufnahmeraum (500) aufweist, an welchem mindestens ein Hebelarm (11) um einen Schwenkbolzen (51) eine Schwenkachse definierend schwenkbar bewegbar mit einem Andrückabschnitt (112) durch eine radiale Öffnung (52) einer Gehäusewand (501) durchgreifend gelagert ist, so dass der Hebelarm (11) von einer Verriegelungsposition über eine Druckentlastungsposition in eine Freistellposition und zurück bringbar ist, wobei der Andrückabschnitt (112) eine vordere Flanke (43) des ersten Verbindungsteils (4) in der Verriegelungsposition lagefixiert bzw. in der Druckentlastungsposition und der Freistellposition freigibt, wobei eine Sicherungsscheibe (10) auf dem Schwenkbolzen (51) annähernd parallel zum Andrückabschnitt (112) und von dem mindestens einen Hebelarm (11) unabhängig schwenkbar gelagert, durch die radiale Öffnung (52) in den Aufnahmeraum (500) teilweise hineinragend und mit dem ersten Verbindungsteil (4) wirkverbindbar ist, wodurch der erste Verbindungsteil (4) in einer gesicherten Druckentlastungsposition relativ zum zweiten Verbindungsteil (5) klemmend lagefixierbar ist,
**dadurch gekennzeichnet, dass**
die Sicherungsscheibe (10) ein Langloch (101) umfasst, mit welchem die Sicherungsscheibe (10) auf dem Schwenkbolzen verschwenkbar gelagert ist.

2. Hebelarmkupplung (1) nach Anspruch 1, **dadurch gekennzeichnet, dass** die Sicherungsscheibe (10) einen Rückhaltenocken (104) umfasst, welcher derart an der Sicherungsscheibe (10) angeformt ist, dass der Rückhaltenocken (104), bei in das Aufnahmegehäuse (50) eingeführtem ersten Verbindungsteil (4), auf die vordere Flanke (43) des ersten Verbindungsteiles (4) durch Verschwenkung der Sicherungsscheibe (10) klemmend pressbar ist, wodurch der erste Verbindungsteil (4) in einer gesicherten Druckerhaltungsposition oder Druckentlastungsposition relativ zum zweiten Verbindungsteil (5) lagefixierbar ist.

3. Hebelarmkupplung (1) nach Anspruch 1, **dadurch gekennzeichnet, dass** die Sicherungsscheibe (10) in einer Ausnehmung (115) im Andrückabschnitt (112) des Hebelarmes (11) schwenkbar und durch den Andrückabschnitt (112) mitnehmbar gelagert ist.

4. Hebelarmkupplung (1) nach Anspruch 1, **dadurch gekennzeichnet, dass** die maximale Schwenkbarkeit der Sicherungsscheibe (10) mittels angeformten Begrenzungsnocken (102) mit einem am zweiten Verbindungsteil (5) angeformten Druckentlastungsanschlag (54) in einer ersten Richtung (B) begrenzt ist.

5. Hebelarmkupplung (1) nach einem der vorhergehenden Ansprüche, **dadurch gekennzeichnet, dass** ein an die Sicherungsscheibe (10) angeformter Mitführnocken (105) die unkontrollierte Rotation der Sicherungsscheibe (10) in eine zweite Richtung (A) durch Anschlag an einen Freistellanschlag (53) begrenzt.

6. Hebelarmkupplung (1) nach Anspruch 3, **dadurch gekennzeichnet, dass** die Sicherungsscheibe (10) durch eine formschlüssige Verbindung einer Aussenkontur (106) der Sicherungsscheibe (10) mit einer Ausnehmungsfläche (117) der Ausnehmung (115) linear und rotativ unbewegbar gehalten wird.

7. Hebelarmkupplung (1) nach Anspruch 6, **dadurch gekennzeichnet, dass** die Sicherungsscheibe (10) eine Aussenkontur (106) aufweist, welche mit der Ausnehmung (115) derart zusammenwirkt, dass die Aussenkontur (106) der Sicherungsscheibe (10) von der Ausnehmungsfläche (117) der Ausnehmung (115) des Andrückabschnittes (112) überstreichbar ist.

8. Hebelarmkupplung (1) nach Anspruch 1, **dadurch gekennzeichnet, dass** die Sicherungsscheibe (10) eine Freistellfläche (103) aufweist, welche bei Stellung des mindestens einen Hebelarmes (11) in die Freistellposition annähernd parallel zur Aussenfläche des ersten Verbindungsteiles (4) ausgerichtet ist, sodass der erste Verbindungsteil (4) aus dem Aufnahmegehäuse (50) entfernbar ist.

9. Hebelarmkupplung (1) nach Anspruch 1, **dadurch gekennzeichnet, dass** das Langloch (101) einen gekrümmten Verlauf aufweist.

10. Hebelarmkupplung (1) nach einem der vorhergehenden Ansprüche, **dadurch gekennzeichnet, dass** mindestens ein Druckentlastungsloch (56)
die Gehäusewand (501) im Bereich des Dichtungsringes (502), das Aufnahmegehäuse (50) durchsetzend, angeordnet ist.

11. Hebelarmkupplung (1) nach einem der vorhergehenden Ansprüche, **dadurch gekennzeichnet, dass** mindestens eine Druckentlastungstasche (57) im Bereich des Dichtungsringes (502) in den Rand der Gehäusewand (501) eingebracht ist.

12. Hebelarmkupplung (1) nach Anspruch 7, **dadurch gekennzeichnet, dass** die Aussenkontur (106) eine ebene Fläche (109) und einen an die ebene Fläche (109) angrenzenden Vorsprung (108) aufweist, wobei eine Kante der Ausnehmungsfläche (117) die ebene Fläche (109) überstreichend und am Vorsprung (108) anschlagend gehalten ist.

## Claims

1. A lever arm coupling (1) for releasably connecting hose lines, comprising a first connection part (4) and a second connection part (5) with a sealing ring (502), wherein the second connection part (5) has an accommodation housing (50) with an accommodation space (500), on which at least one lever arm (11) is mounted such that it can move pivotably about a pivot bolt (51) in a manner defining a pivot axis with a tensioning section (112) penetrating through a radial opening (52) of a housing wall (501), so that the lever arm (11) can be brought from a locking position via a pressure-relief position into a release position and back, wherein the tensioning section (112) fixes a front flank (43) of the first connection part (4) in terms of position in the locking position or releases the same in the pressure-relief position and the release position, wherein a securing disc (10) is pivotably mounted on the pivot bolt (51) approximately parallel to the tensioning section (112) and independently of the at least one lever arm (11), penetrates to some extent through the radial opening (52) into the accommodation space (500) and can be operatively connected to the first connection part (4), as a result of which the first connection part (4) can be fixed in terms of position in a clamping manner in a secured pressure-relief position relative to the second connection part (5),
**characterised in that**
the securing disc (10) comprises a slot (101) using which the securing disc (10) is pivotably mounted on the pivot bolt.

2. The lever arm coupling (1) according to Claim 1, **characterised in that** the securing disc (10) comprises a restraining cam (104) which is moulded on the securing disc (10) in such a manner that the restraining cam (104) can be pressed in a clamping manner onto the front flank (43) of the first connection part (4) by pivoting the securing disc (10) when the first connection part (4) is inserted into the accommodation housing (50), as a result of which the first connection part (4) can be fixed in terms of position in a secured pressure-maintaining position or pressure-relief position relative to the second connection part (5).

3. The lever arm coupling (1) according to Claim 1, **characterised in that** the securing disc (10) is mounted in a recess (115) in the tensioning section (112) of the lever arm (11) pivotably and such that it can be carried along by means of the tensioning section (112).

4. The lever arm coupling (1) according to Claim 1, **characterised in that** the maximum pivot ability of the securing disc (10) is delimited in a first direction (B) by means of moulded-on delimiting cams (102) with a pressure-relief stop (54) moulded on the second connection part (5).

5. The lever arm coupling (1) according to one of the preceding claims, **characterised in that** a driving cam (105) moulded onto the securing disc (10) delimits the uncontrolled rotation of the securing disc (10) in a second direction (A) by butting against a release stop (53).

6. The lever arm coupling (1) according to Claim 3, **characterised in that** the securing disc (10) is held such that it cannot be moved linearly and rotatably by means of a positive-fitting connection of an outer contour (106) of the securing disc (10) to a recess surface (117) of the recess (115).

7. The lever arm coupling (1) according to Claim 6, **characterised in that** the securing disc (10) has an outer contour (106) which interacts with the recess (115) in such a manner that the outer contour (106) of the securing disc (10) can be passed over by the recess surface (117) of the recess (115) of the tensioning section (112).

8. The lever arm coupling (1) according to Claim 1, **characterised in that** the securing disc (10) has a release surface (103) which is orientated approximately parallel to the outer surface of the first connection part (4) when the at least one lever arm (11) is positioned in the release position, so that the first connection part (4) can be removed from the accommodation housing (50).

9. The lever arm coupling (1) according to Claim 1, **characterised in that** the slot (101) has a curved course.

10. The lever arm coupling (1) according to one of the preceding claims, **characterised in that** at least one pressure-relief hole (56) is arranged penetrating the housing wall (501) in the region of the sealing ring (502) and the accommodation housing (50).

11. The lever arm coupling (1) according to one of the preceding claims, **characterised in that** at least one pressure-relief pocket (57) is introduced in the region of the sealing ring (502) into the edge of the housing wall (501).

12. The lever arm coupling (1) according to Claim 7, **characterised in that** the outer contour (106) has a planar surface (109) and a projection (108) adjoining the planar surface (109), wherein an edge of the recess surface (117) is held such that it passes over the planar surface (109) and butts against the projection (108).

## Revendications

1. Accouplement à bras de levier (1) à des fins de liaison réversible de tuyaux flexibles, comprenant une première partie de liaison (4) et une deuxième partie de liaison (5) avec une bague d'étanchéité (502), dans lequel la deuxième partie de liaison (5) présente un logement de réceptacle (50) avec un espace de réceptacle (500), sur lequel au moins un bras de levier (11) est positionné autour d'un pivot d'articulation (51) définissant un axe de basculement de manière mobile par basculement avec une portion de pressage (112) de manière à passer au travers d'une ouverture radiale (52) d'une paroi de logement (501), de telle sorte que le bras de levier (11) puisse être ramené d'une position de déverrouillage en passant par une position de détection en une position de déblocage, dans lequel la portion de pressage (112) fixe en position un flanc avant (43) de la première partie de liaison (4) dans la position de verrouillage, respectivement le débloque dans la position de détente et la position de déblocage, dans lequel une rondelle de blocage (10) est positionnée sur le pivot d'articulation (51) de manière basculante approximativement parallèlement à la portion de pressage (112) et indépendamment d'au moins un bras de levier (11), en saillant partiellement à travers l'ouverture radiale (52) dans l'espace de réceptacle (500) et est relié opérationnellement à la première partie de liaison (4), moyennant quoi la première partie de liaison (4) peut être fixée en position par serrage dans une position de détente sécurisée par rapport à la deuxième pièce de liaison (5),
**caractérisé en ce que**
la rondelle de blocage (10) comprend un alésage oblong (101), avec lequel la rondelle de blocage (10) est positionnée sur le pivot d'articulation de manière basculante.

2. Accouplement à bras de levier (1) selon la revendication 1, **caractérisé en ce que** la rondelle de blocage (10) comprend une came de retenue (104), qui est façonnée sur la rondelle de blocage (10) de telle sorte que la came de retenue (104), quand la première partie de liaison (4) est insérée dans le logement de réceptacle (50), peut être pressée par serrage sur le flanc avant (43) de la première partie de liaison (4) en basculant la rondelle de blocage (10), moyennant quoi la première partie de liaison (4) peut être fixée en position dans une position de maintien de pression ou une position de détente de pression sécurisée par rapport à la deuxième partie de liaison (5).

3. Accouplement à bras de levier (1) selon la revendication 1, **caractérisé en ce que** la rondelle de blocage (10) peut être basculée dans un évidement (115) dans la portion de pressage (112) du bras de levier (11) et est positionnée avec entraînement par l'intermédiaire de la portion de pressage (112).

4. Accouplement à bras de levier (1) selon la revendication 1, **caractérisé en ce que** la faculté de basculement maximale de la rondelle de blocage (10) est limitée au moyen de cames de limitation (102) façonnées avec une butée de détente (54) façonnée sur la deuxième partie de liaison (5) dans une première direction (B).

5. Accouplement à bras de levier (1) selon une des revendications précédentes, **caractérisé en ce que** une came d'entraînement conjoint (105) façonnée sur la rondelle de blocage (10) limite la rotation incontrôlée de la rondelle de blocage (10) dans une deuxième direction (A) par butée sur une butée de déblocage (53).

6. Accouplement à bras de levier (1) selon la revendication 3, **caractérisé en ce que** la rondelle de blocage (10) est maintenue de manière linéaire et immobile rotativement par une liaison par conjonction de forme avec un contour externe (106) de la rondelle de blocage (10) avec une surface d'évidement (117) de l'évidement (115).

7. Accouplement à bras de levier. (1) selon la revendication 6, **caractérisé en ce que** la rondelle de blocage (10) présente un contour externe (106), qui coopère avec l'évidement (115) de telle sorte que le contour externe (106) de la rondelle de blocage (10) puisse être recouvert par la surface d'évidement (117) de l'évidement (115) de la portion de pressage (112).

8. Accouplement à bras de levier (1) selon la revendication 1, **caractérisé en ce que** la rondelle de blocage (10) présente une surface de déblocage (103), qui est alignée lors du positionnement d'au moins un bras de levier (11) dans la position de déblocage approximativement parallèlement à la surface externe de la première partie de liaison (4), de sorte que la première partie de liaison (4) puisse être retirée du logement de réceptacle (50).

9. Accouplement à bras de levier (1) selon la revendication 1, **caractérisé en ce que** l'alésage oblong (101) présente un cours incurvé.

10. Accouplement à bras de levier (1) selon une des revendications précédentes, **caractérisé en ce qu'**au moins un alésage de détente de pression (56) est disposé de manière à percer la paroi de logement (501) au niveau de la bague d'étanchéité (502) du logement de réceptacle (50).

11. Accouplement à bras de levier (1) selon une des revendications précédentes, **caractérisé en ce qu'**au moins une poche de détente de pression (57) est ménagée au niveau de la bague d'étanchéité (502) dans le bord de la paroi de logement (501).

12. Accouplement à bras de levier (1) selon la revendication 7, **caractérisé en ce que** le contour externe (106) présente une surface plane (109) et une protubérance (108) contiguë à la surface plane (109), dans lequel une arête de la surface d'évidement (117) est maintenue en butée sur la protubérance (108) et en recouvrement de la surface plane (109).
